# EUROPÄISCHE PATENTSCHRIFT

(11) **EP 0 582 178 B1**
(45) Veröffentlichungstag und Bekanntmachung des Hinweises auf die Patenterteilung: **20.11.1996**
(21) Anmeldenummer: 93111973.9
(22) Anmeldetag: 28.07.1993
(51) Int. Cl.: F16C 13/00, F16C 27/06, B29C 59/04, B41F 19/06

(54) **Vorrichtung zum Anbringen eines Prägefolien-Abdruckes auf einer flexiblen Materialbahn**
Apparatus for applying an embossing sheet replica to a flexible web
Dispositif pour appliquer une reproduction de feuille à gaufrer sur une bande flexibile

(30) Priorität: 06.08.1992 DE 4226003
(43) Veröffentlichungstag der Anmeldung: 09.02.1994
(73) Patentinhaber: LEONHARD KURZ GMBH & CO., D-90763 Fürth (DE)
(72) Erfinder: Mitsam, Reinwald, D-90579 Langenzenn (DE)
(74) Vertreter: LOUIS, PÖHLAU, LOHRENTZ & SEGETH

(56) Entgegenhaltungen:
- EP-A- 0 469 433
- DE-A- 2 834 979
- DE-A- 3 210 551
- FR-A- 2 137 579
- FR-A- 2 349 762
- US-A- 2 803 507
- US-A- 2 825 439
- US-A- 3 362 760
- US-A- 3 431 035
- US-I- T 981 004
- US-I-T981004 (R. T. MC NEELY ET AL.)

## Beschreibung

Die Erfindung betrifft eine Vorrichtung zum Anbringen eines Prägefolien-Abdruckes auf einer flexiblen Materialbahn mit einer Prägewalze und mit mindestens einer Andruckrolle, mittels welcher die Prägefolie und die Materialbahn gegeneinander und gegen die Mantelfläche der Prägewalze drückbar sind.

Eine solche Vorrichtung ist bspw. aus der DE-C- 32 10 551 bekannt. Dort sind eine Anzahl Andruckrollen jeweils paarweise zusammengefaßt an einem Rollenkorb vorgesehen. Die Andruckrollen können einzeln verstellt werden, wobei zuerst eine oder zwei benachbarte innere Andruckrollen und dann nach außen fortschreitend die weiteren Andruckrollen zur Anlage an der Prägewalze bringbar sind. Insbes. bei empfindlichen flexiblen Materialbahnen wie bspw.

Banknotenpapier ist es mit dieser bekannten Vorrichtung nicht sicher auszuschließen, daß es infolge des vollflächigen Aufeinanderpressens zwischen Andruckrolle und Prägewalze zu einer unerwünschten Komprimierung der Fasern der flexiblen Materialbahn und somit zu einer unerwünschten Veränderung der Eigenschaften der flexiblen Materialbahn kommt.

Deshalb wird in der DE-C- 40 24 537 eine Vorrichtung zum Anbringen eines Prägefolien-Abdruckes auf einer flexiblen Materialbahn vorgeschlagen, mit welcher auch bei empfindlichen flexiblen, mit einem Prägefolien-Abdruck zu beprägenden Materialbahnen eine unerwünschte Komprimierung der Fasern der flexiblen Materialbahn und damit eine unerwünschte Veränderung der Eigenschaften der flexiblen Materialbahn vermieden wird, ohne daß hierdurch die Arbeitsgeschwindigkeit der Vorrichtung beeinträchtigt wird. Das wird dadurch erzielt, daß die mindestens eine Andruckrolle mit einer Einstelleinrichtung zur definierten Einstellung des Abstandes der entsprechenden Andruckrolle relativ zur Prägewalzenoberfläche und damit zur definierten Einstellung des von der Andruckrolle auf die Prägefolie und die Materialbahn ausgeübten Druckes versehen ist.

Durch Dickentoleranzen der Materialbahn und/oder durch thermisch bedingte Formfehler, d.h. thermisch bedingte Unrundheit der Prägewalze kann es bei diesen bekannten Vorrichtungen jedoch zu ungleichmäßigen Eindrücktiefen der mindestens einen Andruckrolle in die Materialbahn und demzufolge zu einem ungleichmäßigen Prägefolien-Abdruck kommen.

Der Erfindung liegt die Aufgabe zugrunde, eine Vorrichtung der eingangs genannten Art so weiterzubilden, daß die zuletzt genannten unterschiedlichen Eindrücktiefen der mindestens einen Andruckrolle in die flexible Materialbahn, d.h. ungleichmäßige Prägefolien-Abdrucke auf der flexiblen Materialbahn, mit einfachen Mitteln zuverlässig vermieden werden.

Diese Aufgabe wird bei einer Vorrichtung der eingangs genannten Art erfindungsgemäß dadurch gelöst, daß die/jede Andruckrolle eine Innenbuchse und eine zur Innenbuchse konzentrische Außenbuchse aufweist, wobei zwischen der Innen- und der Außenbuchse ein Spaltraum vorhanden ist, daß die Innenbuchse an ihrer der Außenbuchse zugewandten Außenmantelfläche mindestens eine umlaufende Ausnehmung zur Aufnahme eines zugehörigen ringförmigen Ausgleichselementes aufweist das aus gummielastischem Material besteht und das gegen die Innen- und Außenbuchse drückt, die Außenbuchse eine Innenhülse und eine hierzu konzentrische Außenhülse aufweist, wobei Innen- und Außenhülse aus unterschiedlichen Materialien bestehen und miteinander mechanisch fest verbunden sind. Das mindestens eine elastisch nachgiebige ringförmige Ausgleichselement ist im besagten Spaltraum zwischen Innen- und Außenbuchse der entsprechenden Andruckrolle derartig vorgesehen, daß es definiert mechanisch vorgespannt ist. Durch diese definierte mechanische Vorspannung werden die Innenbuchse und die Außenbuchse der entsprechenden Andruckrolle miteinander genau zentriert. Bei einer radialen Belastung der entsprechenden Andruckrolle infolge einer Dickentoleranz der zu beprägenden Materialbahn und/oder infolge thermisch bedingter Unrundheit der Prägewalze kann die Außenbuchse mit Hilfe des zugehörigen elastisch nachgiebigen Ausgleichselementes relativ zur Innenbuchse der entsprechenden Andruckrolle eine federnde Ausgleichsbewegung ausführen und auf diese Weise Dickentoleranzen der Materialbahn bzw. Formfehler der Prägewalze ausgleichen. Ein weiterer erheblicher Vorteil der erfindungsgemäßen Vorrichtung besteht darin, daß durch die relativ geringe gefederte Masse der entsprechenden Andruckrolle, d.h. durch die gefederte Masse ihrer Außenbuchse, auch kurzwellige Fehler in der Materialbahn bzw. in der Prägewalze bei hohen Arbeitsgeschwindigkeiten der Vorrichtung gut ausgeglichen werden können. Eine einfach herzustellende Vorrichtung mit dem Vorteil einer einfachen, zeitsparenden und exakten Anordnung des mindestens einen elastisch nachgiebigen, ringförmigen Ausgleichselementes im Spaltraum zwischen Innen- und Außenbuchse der entsprechenden Andruckrolle ergibt sich, wenn die Innenbuchse an ihrer der Außenbuchse zugewandten Außenmantelfläche mindestens eine umlaufende Ausnehmung zur Aufnahme eines zugehörigen ringförmigen Ausgleichselementes aufweist. Durch geeignete Dimensionierung der mindestens einen umlaufenden Ausnehmung in der Außenmantelfläche der Innenbuchse und durch eine daran geeignet angepaßte Dimensionierung des Querschnittsprofils des entsprechenden Ausgleichselementes bzw. durch geeignete Materialauswahl für das Ausgleichselement ist es möglich, die Federungscharakteristik zwischen der begrenzt beweglichen Außenbuchse und der hierzu quasi ortsfesten Innenbuchse in weiten Bereichen wunschgemäß festzulegen. Als vorteilhaft hat es sich erwiesen, wenn bei radialen Abmessungen des Spaltraumes in der Größenordnung um 0,5 mm der Werkstoff des mindestens einen elastisch nachgiebigen ringförmigen Ausgleichselementes eine Härte zwischen 50 und 100 Shore, vorzugsweise zwischen ca. 60 und 90 Shore, aufweist. Es sind Elastomer-Materialien verfügbar, die eine solche Härte aufweisen. Eine optimale Anpassung an die Material- und/oder Prägeeigenschaften der zu beprägenden flexiblen Materialbahn ergibt sich, wenn die Außenbuchse eine Innenhülse und eine hierzu konzentrische Außenhülse aufweist, wobei Innen- und Außenhülse aus unterschiedlichen Materialien bestehen und miteinander mechanisch fest verbunden sind. Hierbei kann die Innenhülse aus einem geeigneten Metall bzw. aus einer geeigneten Metallegierung bestehen. Die Außenhülse kann aus einer mit Baumwolle gefüllten Phenolharzpreßmasse sein. Selbstverständlich sind -je nach Einsatz-Zweck- auch andere Materialkombinationen möglich. Die mechanisch feste Verbindung zwischen Innen- und Außenhülse der Außenbuchse kann durch eine Preß- und/oder Klebeverbindung realisiert sein.

Bei einer Vorrichtung der eingangs genannten Art, bei welcher die/jede Andruckrolle mit einer Einstelleinrichtung zur definierten Einstellung des Abstandes der entsprechenden Andruckrolle relativ zur Prägewalze und damit zur definierten Einstellung des auf die Prägefolie und die Materialbahn ausgeübten Druckes versehen ist, hat es sich als vorteilhaft erwiesen, wenn die Innenbuchse mittels Lagereinrichtungen an einem Exzenterabschnitt einer zentrisch an einem Lagerbock verdrehbar angeordneten Lagerachse der Einstelleinrichtung gelagert ist. Mit der genannten Lagerachse kann eine skalierte Einstelleinrichtung verbunden sein, um die Exzentrizität des Exzenterabschnittes der Lagerachse definiert einstellen und in der eingestellten Position festhalten zu können. Damit können Abmessungstoleranzen einfach ausgeglichen werden, was insbes. dann vorteilhaft ist, wenn die/jede Andruckrolle im Vergleich zur Prägewalze schmal und mit dem zugehörigen Lagerbock an einer zur Achsenrichtung der Prägewalze parallelen Tragkonsole linear verstellbar ist. Insbesondere bei einer breiten Prägewalze in der Größenordnung um 500 mm und größer und einer entsprechend langen Tragkonsole kann es nämlich zu Durchbiegungen der Tragkonsole kommen, welche mittels der erwähnten Einstelleinrichtung einfach ausgeglichen werden können.

An jeder Seitenfläche der mindestens einen Andruckrolle kann zum abdichtenden Verschließen des Spaltraumes zwischen Innen- und Außenbuchse ein ringförmiges Abdeckelement vorgesehen sein. Bei einer solchen Ausbildung der erfindungsgemäßen Vorrichtung hat es sich als zweckmäßig erwiesen, wenn die Abdeckelemente an der Innenbuchse der entsprechenden Andruckrolle befestigt sind, wobei die Außenhülse der Außenbuchse über jedes der beiden seitlichen Abdeckelemente radial übersteht. Um bei einer derartigen Ausbildung der Vorrichtung Abmessungstoleranzen der Innen- und der Außenbuchse in axialer Richtung problemlos zu beseitigen, hat es sich als vorteilhaft erwiesen, wenn bei einer Vorrichtung der zuletzt erwähnten Art die Innenbuchse axial breiter ist als die Außenbuchse bzw. die Innen- und Außenhülse der Außenbuchse, so daß zwischen jedem Abdeckelement und der zugehörigen Außenbuchse bzw. Innen- und Außenhülse der Außenbuchse ein Spaltraum gegeben ist. Um diesen Spaltraum zwischen dem entsprechenden Abdeckelement und der Außenbuchse zum Spaltraum zwischen Innenbuchse und Außenbuchse hin abzudichten, hat es sich als vorteilhaft erwiesen, wenn die beiden Abdeckelemente an ihrer Innenseite mit einer umlaufenden kreisförmigen Rille ausgebildet sind, in der ein in den entsprechenden Spaltraum hineinstehendes und an der Außenbuchse abdichtend anliegendes ringförmiges Abdichtelement angeordnet ist. Durch die zuletzt genannten ringförmigen Abdichtelemente wird nicht nur eine seitliche Führung der Außenbuchse in axialer Richtung relativ zur Innenbuchse erzielt, sondern auch das Eindringen von Staubpartikeln oder anderer Teilchen in den Spaltraum zwischen Innen- und Außenbuchse verhindert.

Ist nach einer langen Standzeit bzw. Einsatzdauer einer solchen Andruckrolle eine Reparatur derselben, d.h. bspw. der Austausch des mindestens einen elastisch nachgiebigen Ausgleichselementes zwischen Innen- und Außenbuchse erforderlich, so ist es zeitsparend möglich, die entsprechende Andruckrolle in ihre Einzelteile zu zerlegen und gegebenenfalls auszubessern.

Während es mit den bekannten Vorrichtungen der gattungsgemäßen Art mit z.B. hydraulisch druckgeregelter Zustellung der Andruckrollen zur Prägewalze nur möglich ist, relativ große Dickentoleranzen in der zu beprägenden Materialbahn und/oder relativ große thermische Unrundheit der Prägewalze auszugleichen, ist es mit der erfindungsgemäßen Vorrichtung möglich, auch vergleichsweise kleine Fehler bei hohen Arbeitsgeschwindigkeiten der Vorrichtungen gut auszugleichen.

Weitere Einzelheiten, Merkmale und Vorteile ergeben sich aus der nachfolgenden Beschreibung eines in der Zeichnung abschnittweise dargestellten Ausführungsbeispieles der erfindungsgemäßen Vorrichtung zum Anbringen eines Prägefolien-Abdruckes auf einer flexiblen Materialbahn. Es zeigen:
- Fig. 1: eine Teilansicht der Vorrichtung in Richtung von der nicht gezeichneten Prägewalze zu einem Andruckrollen-Paar, wobei die Tragkonsole, auf welcher das Andruckrollen-Paar linear verstellbar angeordnet ist, nur abschnittweise gezeichnet ist,
- Fig. 2: einen Schnitt entlang der Schnittlinie II-II in Fig.1 durch die Vorrichtung, wobei die Prägewalze nur abschnittweise angedeutet ist,
- Fig. 3: eine Ansicht des Abschnittes der Vorrichtung gemäß Fig.1 in Blickrichtung des Pfeiles III, d.h. von der Seite, wobei die entsprechende Andruckrolle und der Lagerbock halbseitig geschnitten gezeichnet sind, und
- Fig. 4: eine vergrößerte Darstellung eines Abschnittes der Andruckrolle und eines Abschnittes des Lagerbockes der Andruckrolle in einer geschnittenen Darstellung.

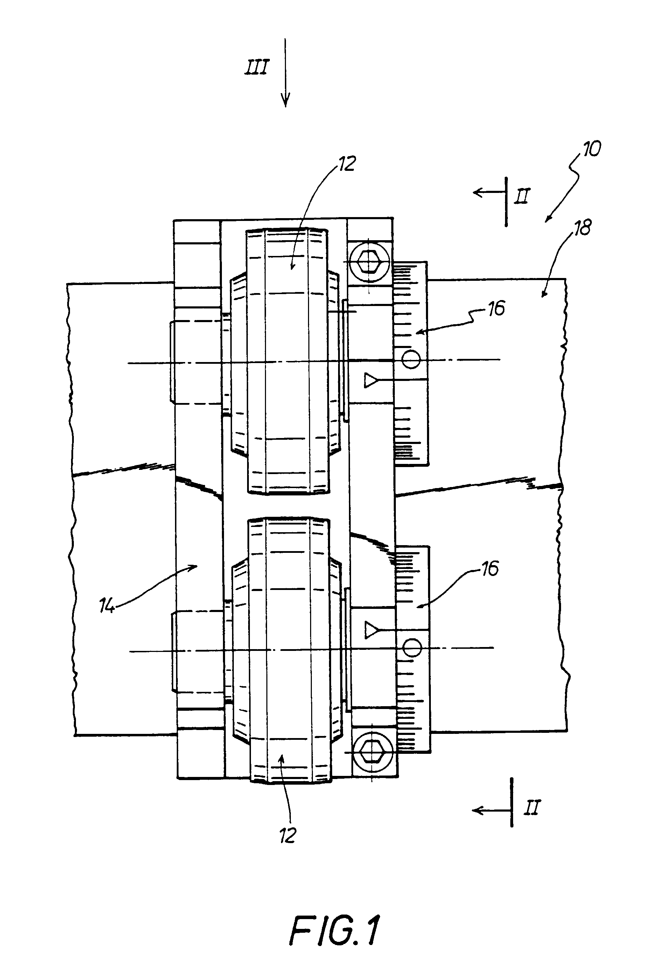

Fig. 1 zeigt in einer Ansicht von oben abschnittweise eine Vorrichtung 10 zum Anbringen eines Prägefolien-Abdruckes auf einer flexiblen Materialbahn, wobei auf die Darstellung der beheizbaren Prägewalze verzichtet worden ist, um ein Paar Andruckrollen 12 zu verdeutlichen, die an einem Lagerbock 14 zueinander parallel drehbar gelagert sind. Jede Andruckrolle 12 ist mittels einer Einstelleinrichtung 16 in Bezug auf die nicht gezeichnete Prägewalze der Vorrichtung 10 wunschgemäß einstellbar. Der Lagerbock 14 ist entlang einer abschnittweise gezeichneten Tragkonsole 18 linear verstellbar angeordnet.

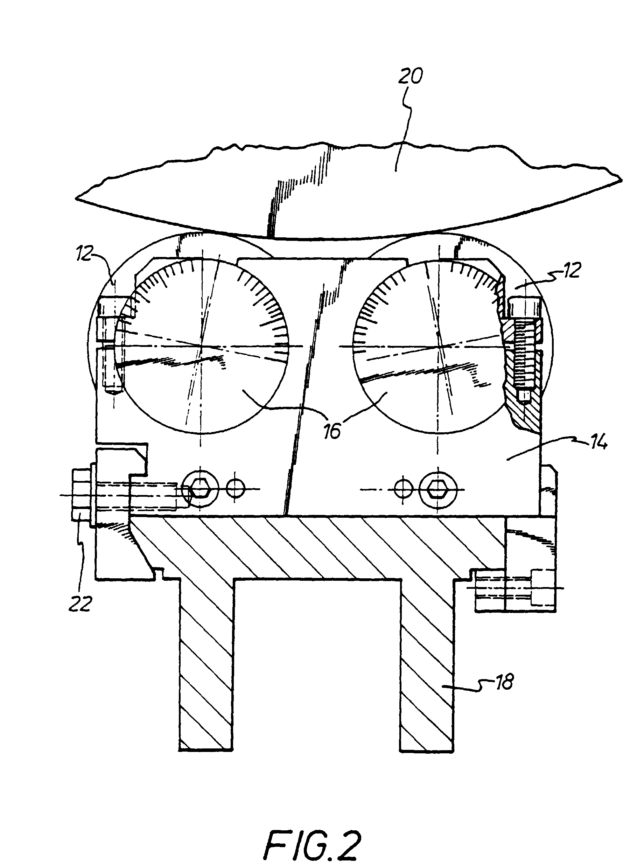

Die Fig. 2 verdeutlicht das Querschnittsprofil der Tragkonsole 18, auf welcher linear geführt der Lagerbock 14 für die beiden Andruckrollen 12 angeordnet ist. Mit der Bezugsziffer 16 sind auch in dieser Figur die skalierten Einstelleinrichtungen für die Andruckrollen 12 bezeichnet. Mit Hilfe der Einstelleinrichtungen 16 können die Andruckrollen 12 in bezug auf die in Fig. 2 abschnittweise gezeichnete beheizbare Prägewalze 20 wunschgemäß verstellt werden. Durch die wunschgemäße Verstellung der Andruckrollen 12 relativ zur Prägewalze 20 ist eine definierte Einstellung des Abstandes der entsprechenden Andruckrolle 12 relativ zur Prägewalze 20 und damit eine definierte Einstellung des auf die zwischen Prägewalze 20 und den Andruckrollen 12 hindurchbewegte (nicht gezeichnete) Prägefolie und zu beprägende Materialbahn ausgeübten Druckes möglich.

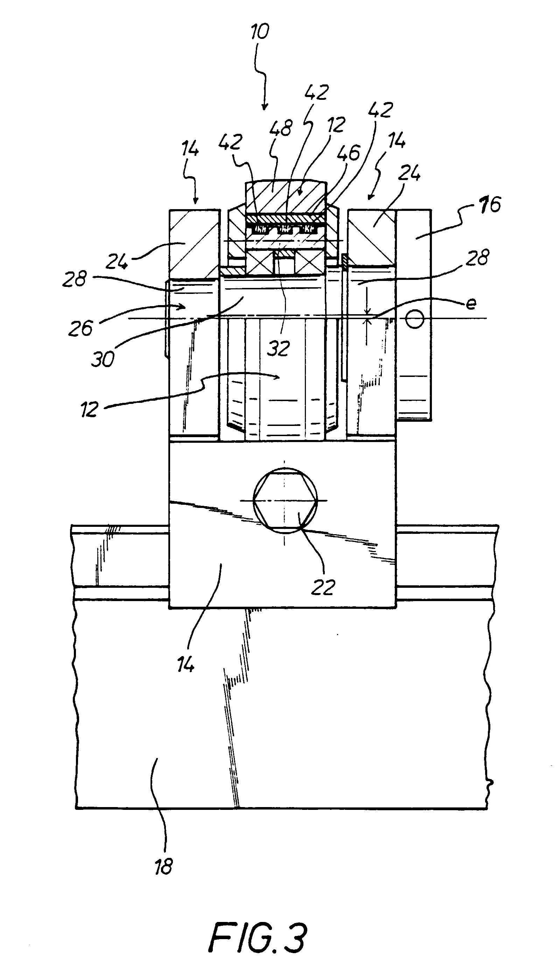

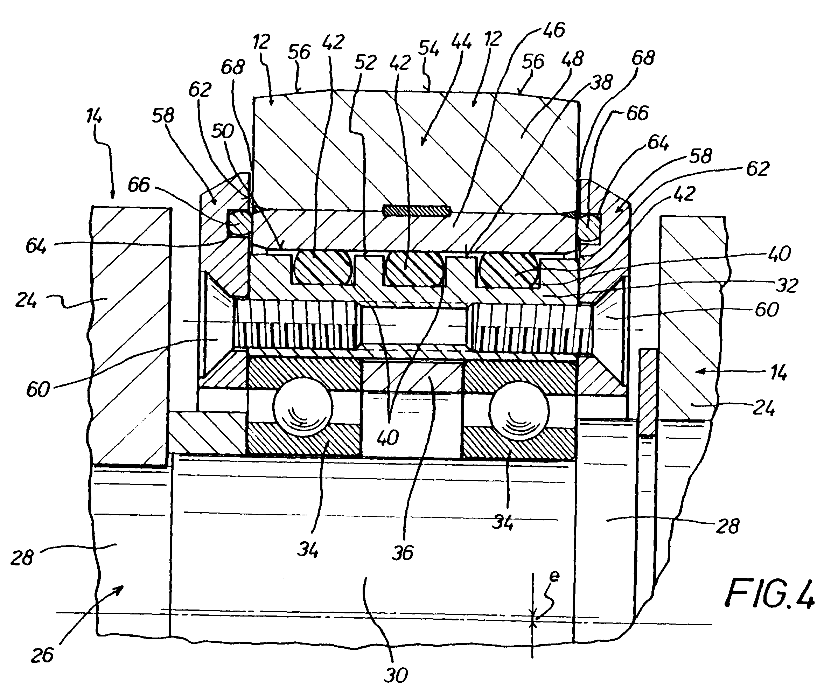

Fig. 3 zeigt in einer Seitenansicht abschnittweise die Tragkonsole 18, auf welcher der Lagerbock 14 für ein Paar Andruckrollen 12 linear verstellbar angeordnet ist. Mittels eines Schraubelementes 22 (sh. auch Fig. 2) ist es möglich, den Lagerbock 14 in einer bestimmten Position auf der Tragkonsole 18 zu fixieren. Aus Fig. 3 und insbes. auch aus Fig. 4 ist ersichtlich, daß am Lagerbock 14 zwischen zwei voneinander beabstandeten Lagerschenkeln 24 eine Lagerachse 26 gelagert ist, die zwischen zwei koaxialen Lagerabschnitten 28 einen Exzenterabschnitt 30 aufweist. Der Exzenterabschnitt 30 weist in Bezug auf die beiden seitlichen Lagerabschnitte 28 eine Exzentrizität e auf. Durch Verdrehen der Lagerachse 26, was mit Hilfe der skalierten Einstelleinrichtung 16 möglich ist, kann die zugehörige Andruckrolle 12 wunschgemäß radial und demzufolge relativ zur Prägewalze (sh. Fig. 2) verstellt werden.

Jede Andruckrolle 12 weist eine Innenbuchse 32 auf, die mittels Lagereinrichtungen 34, bei denen es sich z.B. um Kugellager handelt, am Exzenterabschnitt 30 der Lagerachse 26 drehbar gelagert ist. Die Lagereinrichtungen 34 werden mittels eines Distanzringes 36 voneinander definiert auf Abstand gehalten. Die Innenbuchse 32 ist an ihrer Außenmantelfläche 38 mit voneinander beabstandeten umlaufenden Ausnehmungen 40 ausgebildet, die zur Aufnahme eines zugehörigen ringförmigen Ausgleichselementes 42 aus einem elastisch nachgiebigen Material definierter Härte vorgesehen sind.

Die Innenbuchse 32 ist von einer Außenbuchse 44 konzentrisch umgeben, die eine Innenhülse 46 und eine Außenhülse 48 aufweist. Die Innenhülse 46 besteht bspw. aus einem Metall oder aus einer Metallegierung, während die Außenhülse 48 z.B. aus einer Phenolharzpreßmasse o.dgl. besteht. Innen- und Außenhülse 46 und 48 sind miteinander verklebt und/oder verpreßt.

Der Innendurchmesser der Außenbuchse 44 bzw. der Innenhülse 46 der Außenbuchse 44 ist etwas größer als der Außendurchmesser der Innenbuchse 32, so daß sich zwischen der Außenmantelfläche 38 der Innenbuchse 32 und der Innenmantelfläche 50 der Außenbuchse 44 ein Spaltraum 52 ergibt. Dieser Spaltraum 52 wird durch die elastisch nachgiebigen ringförmigen Ausgleichelemente 42 überbrückt, die sowohl gegen die Innenbuchse 32 als auch gegen die Außenbuchse 44 drücken. Mit Hilfe der elastisch nachgiebigen Ausgleichselemente 42 können demzufolge Dickentoleranzen der zu beprägenden Materialbahn oder thermisch bedingte Unrundheiten der Prägewalze 20 der Vorrichtung 10 in vorteilhafter Weise ausgeglichen werden.

Um in empfindlichen zu beprägenden Materialbahnen wie bspw. Banknotenpapier einen Kantenabdruck der entsprechenden Andruckrolle 12 zu verhindern, ist die Außenmantelfläche 54 der Außenbuchse 44 bzw. der Außenhülse 48 der Außenbuchse 44 an ihren beiden Randabschnitten 56 unter einem kleinen Winkel abgeschrägt.

An jeder Seitenfläche der entsprechenden Andruckrolle 12 ist zum abdichtenden Verschließen des Spaltraumes 52 zwischen Innen- und Außenbuchse 32, 44 ein ringförmiges Abdeckelement 58 mittels Schrauben 60 befestigt. Jedes Abdeckelement 58 ist an seiner Innenseite 62 mit einer umlaufenden kreisförmigen Rille 64 ausgebildet, in der ein ringförmiges Abdichtelement 66 angeordnet ist. Jedes Abdichtelement 66 liegt nicht nur am zugehörigen ringförmigen Abdeckelement 58, sondern außerdem auch an der Außenbuchse 44 der entsprechenden Andruckrolle 12 an, so daß mit Hilfe des entsprechenden Abdichtelementes 66 der Zugang zum Spaltraum 52 zwischen Innen- und Außenbuchse 32, 44 abgedichtet ist. Außerdem ist durch die beiden Abdichtelemente 66 eine begrenzte axiale Beweglichkeit der Außenbuchse 44 relativ zur zugehörigen Innenbuchse 32 der entsprechenden Andruckrolle 12 möglich.

Aus Fig. 4 ist auch deutlich ersichtlich, daß die Innenbuchse 32 axial breiter ist als die Außenbuchse 44 bzw. die Innen- und Außenhülse 46, 48 der besagten Außenbuchse 44, so daß zwischen jedem Abdeckelement 58 und dazugehörigen Außenbuchse 44 ein Spiel- bzw. Spaltraum 68 vorhanden ist. Aus dieser Figur sind drei Ausgleichselemente 42 ersichtlich, die voneinander axial beabstandet sind. Durch eine derartige Ausbildung mit mehreren Ausgleichselementen 42 kann die Außenbuchse 44 bzw. die Innen- und Außenhülse 46, 48 nicht nur achsparallel radial federn, sondern es ist in geringem Maße auch ein differenziertes, d.h. taumelndes Federn der Außenbuchse 44 bzw. der Innen- und Außenbuchse 46, 48 möglich. Das wirkt sich z.B. besonders bei zu dekorierenden Papieren positiv aus, die ein Wasserzeichen besitzen.

## Patentansprüche

1. Vorrichtung zum Anbringen eines Prägefolien-Abdruckes auf einer flexiblen Materialbahn mit einer Prägewalze (20) und mit mindestens einer Andruckrolle (12), mittels welcher die Prägefolie und die Materialbahn gegeneinander und gegen die Mantelfläche der Prägewalze (20) drückbar sind,
**dadurch gekennzeichnet**,
daß die/jede Andruckrolle (12) eine Innenbuchse (32) und eine zur Innenbuchse (32) konzentrische Außenbuchse (44) aufweist, wobei zwischen der Innen- und der Außenbuchse (32, 44) ein Spaltraum (52) vorhanden ist, daß die Innenbuchse (32) an ihrer der Außenbuchse (44) zugewandten Außenmantelfläche (38) mindestens eine umlaufende Ausnehmung (40) zur Aufnahme eines zugehörigen ringförmigen Ausgleichselementes (42) aufweist, das aus gummielastischem Material besteht, und das gegen die Innen- und die Außenbuchse (32, 44) drückt, und daß die Außenbuchse (44) eine Innehülse (46) und eine hierzu konzentrische Außenhülse (48) aufweist, wobei Innen- und Außenhülse (46, 48) aus unterschiedlichen Materialien bestehen und miteinander mechanisch fest verbunden sind.

2. Vorrichtung nach Anspruch 1, wobei die/jede Andruckrolle (12) mit einer Einstelleinrichtung (16) zur definierten Einstellung des Abstandes der entsprechenden Andruckrolle (12) relativ zur Prägewalze (20) und damit zur definierten Einstellung des auf die Prägefolie und die Materialbahn ausgeübten Druckes versehen ist,
**dadurch gekennzeichnet**,
daß die Innenbuchse (32) mittels Lagereinrichtungen (34) an einem Exzenterabschnitt (30) einer an einem Lagerbock (14) verdrehbar angeordneten Lagerachse (26) der Einstelleinrichtung (16) gelagert ist.

3. Vorrichtung nach Anspruch 2,
**dadurch gekennzeichnet**,
daß die/jede Andruckrolle (12) im Vergleich zur Prägewalze (12) schmal und mit dem zugehörigen Lagerbock (14) an einer zur Achsenrichtung der Prägewalze (20) parallelen Tragkonsole (18) linear verstellbar ist.

4. Vorrichtung nach einem der vorhergehenden Ansprüche,
**dadurch gekennzeichnet**,
daß an jeder Seitenfläche der/jeder Andruckrolle (12) zum abdichtenden Verschließen des Spaltraumes (52) zwischen Innen- und Außenbuchse (32, 44) ein ringförmiges Abdeckelement (58) vorgesehen ist.

5. Vorrichtung nach Anspruch 4,
**dadurch gekennzeichnet**,
daß die Abdeckelemente (58) an der Innenbuchse (32) der entsprechenden Andruckrolle (12) befestigt sind, wobei die Außenhülse (48) der Außenbuchse (44) über das Abdeckelement (58) radial übersteht.

6. Vorrichtung nach Anspruch 5,
**dadurch gekennzeichnet**,
daß die Innenbuchse (32) axial breiter ist als die Außenbuchse (44) bzw. die Innen- und Außenhülse (46, 48) der Außenbuchse (44), so daß zwischen jedem Abdeckelement (58) und der zugehörigen Außenbuchse (44) bzw. Innen- und Außenhülse (46, 48) der Außenbuchse (44) ein Spaltraum (68) vorhanden ist.

7. Vorrichtung nach Anspruch 6,
**dadurch gekennzeichnet**,
daß die Abdeckelemente (58) an ihrer Innenseite (62) mit einer umlaufenden kreisförmigen Rille (64) ausgebildet sind, in der ein in den entsprechenden Spaltraum (68) hineinstehendes und an der Außenbuchse (44) abdichtend anliegendes ringförmiges Abdichtelement (66) angeordnet ist.

## Claims

1. An apparatus for applying an embossing sheet imprint onto a flexible material web, with an embossing roller (20) and with at least one pressing-on roller (12), by means of which the embossing sheet and the material web can be pressed against each other and against the lateral surface of the embossing roller (20),
**characterized in that**
the/each pressing-on roller (12) has an inner bush (32) and an outer bush (44) concentric with the inner bush (32), in which arrangement a gap (52) is provided between the inner and the outer bush (32, 44), that on its outer lateral surface (38) facing the outer bush (44), the inner bush (32) has at least one peripheral recess (40) for receiving an associated annular compensation element (42) which consists of a rubber-resilient material and which presses against the inner and the outer bush (32, 44), and that the outer bush (44) has an inner sleeve (46) and an outer sleeve (48) concentric therewith, in which arrangement, the inner and outer sleeve (46, 48) consist of different materials and are mechanically rigidly connected to each other.

2. An apparatus according to claim 1, in which arrangement the/each pressing-on roller (12) is provided with an adjustment device (16) for the defined setting of the spacing of the corresponding pressing-on roller (12) relative to the embossing roller (20), and hence for the defined setting of the pressure exerted on the embossing sheet and the material web,
**characterized in that**
the inner bush (32) is mounted by means of bearing devices (34) on a cam section (30) of a bearing pin (26) of the adjustment device (16), arranged for rotation on a bearing block (14) .

3. An apparatus according to claim 2,
**characterized in that** the/each pressing-on roller (12) is narrow as compared with the embossing roller (20), and is linearly adjustable with the associated bearing block (14) on a bearing bracket (18) disposed parallel to the axial direction of the embossing roller (20).

4. An apparatus according to one of the preceding claims,
**characterized in that**
an annular cover element (58) is provided on each side face of the/each pressing-on roller (12) for sealing the gap (52) between the inner and outer bush (32, 44) in a leakproof manner.

5. An apparatus according to claim 4,
**characterized in that**
the cover elements (58) are secured on the inner bush (32) of the corresponding pressing-on roller (12), in which arrangement, the outer sleeve (48) of the outer bush (44) radially projects over the cover element (58).

6. An apparatus according to claim 5,
**characterized in that**
the inner bush (32) is axially wider than the outer bush (44), or the inner and outer sleeve (46, 48) of the outer bush (44), so that between each cover element (58) and the associated outer bush (44), or the inner and outer sleeve (46, 48) of the outer bush (44), there exists a gap (68).

7. An apparatus according to claim 6
**characterized in that**
the cover elements (58) are designed on their inner side (62) with a peripheral circular groove (64) wherein there is arranged an annular sealing element (66) projecting into the corresponding gap (68) and bearing on the outer bush (44) with a sealing effect.

## Revendications

1. Dispositif pour appliquer une reproduction de feuille à gaufrer sur une bande flexible avec un cylindre (20) à gaufrer et avec au moins un rouleau (12) de pression au moyen duquel la feuille à gaufrer et la bande flexible peuvent être pressées l'une contre l'autre et contre la surface d'enveloppe du cylindre (20) à gaufrer, caractérisé en ce que le/chaque rouleau (12) de pression présente un boîtier (32) intérieur et un boîtier (44) extérieur concentrique par rapport au boîtier (32) intérieur, un espace (52) interstitiel se trouvant entre le boîtier (32, 44) intérieur et extérieur, en ce que sur sa surface (38) d'enveloppe extérieure orientée vers le boîtier (44) extérieur, le boîtier (32) intérieur présente au moins un évidement (40) de contour pour loger un élément (42) de compensation annulaire y afférent, qui est en matière caoutchoutée élastique et qui presse contre le boîtier (32, 44) intérieur et extérieur et en ce que le boîtier (44) extérieur présente une gaine (46) intérieure et une gaine (48) extérieure concentrique par rapport à celle-ci, la gaine (46, 48) intérieure et extérieure étant en matériaux différents et étant reliées mécaniquement l'une avec l'autre de manière fixe.

2. Dispositif selon la revendication 1, dans lequel le/chaque rouleau (12) de pression est pourvu d'un dispositif (16) de réglage pour le réglage défini de la distance du rouleau (12) de pression correspondant par rapport au cylindre (20) à gaufrer et par conséquent pour le réglage défini de la pression exercée sur la feuille à gaufrer et sur la bande élastique, caractérisé en ce que le boîtier (32) intérieur est logé par des dispositifs (34) de palier sur une section (30) excentrée d'un axe (26) de palier du dispositif (16) de réglage, disposé de manière rotative sur un palier (14).

3. Dispositif selon la revendication 2, caractérisé en ce que le/chaque rouleau (12) de pression peut être ajusté étroitement par rapport au cylindre (12) à gaufrer et linéairement par rapport au palier (14) y afférent sur une console (18) de support parallèle à la direction de l'axe du cylindre (20) à gaufrer.

4. Dispositif selon un des revendications précédentes, caractérisé en ce que sur chaque surface latérale du/de chaque rouleau (12) de pression, un élément (58) d'obturation annulaire est prévu entre le boîtier (32, 44) intérieur et extérieur pour fermer hermétiquement l'espace (52) interstitiel.

5. Dispositif selon la revendication 4, caractérisé en ce que les éléments (58) d'obturation sont fixés sur la gaine (32) intérieure du rouleau (12) de pression correspondant, la gaine (48) extérieure du boîtier (44) extérieur faisant saillie radialement au-dessus de l'élément (58) d'obturation.

6. Dispositif selon la revendication 5, caractérisé en ce que le boîtier (32) intérieur est axialement plus large que le boîtier (44) extérieur ou encore que la gaine (46, 48) intérieure et extérieure du boîtier (44) extérieur, de sorte qu'entre chaque élément (58) d'obturation et le boîtier (44) extérieur y afférent ou encore la gaine (46, 48) intérieure et extérieure du boîtier (44) extérieur se trouve un espace (68) interstitiel.

7. Dispositif selon la revendication 6, caractérisé en ce que les éléments (58) d'obturation sont conformés sur leur côté (62) intérieur avec une rainure (64) circulaire de contour, dans laquelle un élément (66) d'obturation annulaire est disposé de manière hermétiquement jointive au boîtier extérieur et de manière à se trouver dans l'espace (68) interstitiel correspondant.
